# EUROPEAN PATENT SPECIFICATION

(11) **EP 3 388 322 B1**
(45) Date of publication and mention of the grant of the patent: **15.07.2020**
(21) Application number: 18167348.4
(22) Date of filing: 13.04.2018
(51) Int. Cl.: B62L 3/04, B62L 3/08

(54) **STRADDLED VEHICLE**
GRÄTSCHSITZFAHRZEUG
VÉHICULE À ENFOURCHER

(30) Priority: 14.04.2017 JP 2017080613; 27.02.2018 JP 2018033155
(43) Date of publication of application: 17.10.2018
(73) Proprietor: Yamaha Hatsudoki Kabushiki Kaisha, Iwata-shi, Shizuoka 438-8501 (JP)
(72) Inventor: NAGASE, Yasunobu, Shizuoka, 4380026 (JP)
(74) Representative: Moreland, David

(56) References cited:
- EP-A2- 2 682 334
- JP-A- 2015 160 547

## Description

### FIELD OF INVENTION

The present invention relates to a straddled vehicle or straddle-type vehicle. The invention relates to a straddled vehicle comprising a combined brake device.

### BACKGROUND TO INVENTION

Straddled vehicles having a vehicle body frame having a head pipe, and a steering device. The steering device has a handle member to be operated by a rider (driver) with his/her hands and is turnably supported by the head pipe. Additionally, the straddled vehicle has a seat, a front wheel and a rear wheel. The seat, on which the driver is seated, is disposed rearward of the steering device. The front wheel is rotatably supported by the steering device. The rear wheel is disposed rearward of the front wheel.

In terms of improvement of merchantability in the market, there is a type of straddled vehicle having a combined brake device. In transmitting an operating force of a brake pedal, the combined brake device distributes the operating force to a rear brake device and a front brake device, whereby the rear brake device and the front brake device are actuated in a linked manner.

For example, a combined brake device described in Japan Laid-open Patent Application Publication No. 2013-154845 includes a brake pedal, a combined brake transmission member, a rear brake transmission member and an equalizer. The brake pedal is disposed lower than a seat on which a driver is seated, and is operated by the driver with his/her foot. The brake pedal is rotatably supported by a vehicle body through a pedal shaft. The combined brake transmission member is connected to a front brake device. The rear brake transmission member is connected to a rear brake device. The equalizer is rotatably connected to the brake pedal through an equalizer shaft. One end of the equalizer is connected to the combined brake transmission member, whereas the other end of the equalizer is connected to the rear brake transmission member.

When the brake pedal is depressed or pressed down, the motion of the brake pedal is transmitted to the equalizer. Accordingly, the equalizer pulls the rear brake transmission member, whereby the rear brake device adopts a braked state. Additionally, the equalizer pulls the combined brake transmission member, whereby the front brake device adopts a braked state. Thus, the equalizer distributes the operating force of the brake pedal to the front brake device and the rear brake device.

In the aforementioned combined brake device, the center axis of the equalizer shaft is located rearward of the center axis of the pedal shaft. Therefore, the other components of the combined brake device, such as the combined brake transmission member, are also designed to be located rearward in accordance with the position of the equalizer. In other words, a sufficient space is required behind the brake pedal to dispose the combined brake device. However, in addition to the combined brake device, components such as a silencer are disposed behind the brake pedal. Hence, it is not easy to reliably produce or provide a sufficient space in order to dispose the combined brake device.

In view of this, the Inventor of the present invention devised a layout that the center axis of the equalizer shaft is disposed forward of the center axis of the pedal shaft. In this layout, the other components of the combined brake device can be also disposed forward of those in a well-known layout in accordance with the position of the equalizer. Hence, it is possible to reduce the space required behind the brake pedal to dispose the combined brake device.

However, when the center axis of the equalizer shaft is shifted forward of that in the well-known layout, change in angle inevitably occurs between the equalizer and either the rear brake transmission member or the combined brake transmission member. The angle between the equalizer and either the rear brake transmission member or the combined brake transmission member is adjusted to fall in a predetermined range so as to ensure the comfort of brake operation by efficiently transmitting the operating force of the brake pedal. However, it is a concern that change in efficiency of transmitting the operating force causes degradation in the comforts of brake operation when such change in angle occurs in shifting the center axis of the equalizer shaft forward of that in the well-known layout. Besides, it could be possible to obtain sufficiently high capability as a combined brake device.

It is an object of at least one embodiment of the present invention to obviate or mitigate one or more problems and/or disadvantages of the prior art. EP 2,682,334 A2 (Yamaha Motor Co Ltd) is considered the closest prior art and describes a straddled vehicle comprising:a vehicle body frame comprising a head pipe;a steering device comprising a handle member manually operable by a rider, the steering device being turnably supported by the head pipe;a seat on which the rider is seatable, the seat being disposed rearward of the steering device;a front wheel rotatably supported by the steering device;a rear wheel disposed backward of the front wheel;a front brake device for braking the front wheel;a rear brake device for braking the rear wheel;a brake pedal disposed below the seat, the brake pedal being operated with a foot of the driver;a pedal shaft supporting the brake pedal such that the brake pedal is rotatable with respect to the vehicle frame; anda combined brake device which, in use, causes the rear brake device and the front brake device to be actuated in a linked manner in response to operating the brake pedal, wherein the combined brake device comprising:a combined brake transmission member connected to the front brake device,a rear brake transmission member connected to the rear brake device,an equalizer, and an equalizer shaft supporting the equalizer such that the equalizer is rotatable with respect to the brake pedal,the equalizer comprising:a first connection portion to which the combined brake transmission member is connected, and a second connection portion to which the rear brake transmission member is connected, whereina center axis of the equalizer shaft is located forward of a center axis of the pedal shaft when the brake pedal is in a zero stroke position, anda center of the second connection portion is located on or rearward of an imaginary straight line passing through a center of the first connection portion and the center axis of the equalizer shaft in a vehicle side view.

It is an object of at least one embodiment of the present invention to reduce a space required behind a brake pedal to dispose a combined brake device, and also, to inhibit change in efficiency of transmitting an operating force in a straddled vehicle and inhibit degradation in the comfort of brake operation.

### SUMMARY OF INVENTION

According to an aspect of the present invention there is provided a straddled vehicle according to the appended claims.

There is provided a straddled vehicle according to the features of appended claim 1.

In the straddled vehicle according the appended claims, when the brake pedal is in the zero stroke position, the center axis of the equalizer shaft is located forward of the center axis of the pedal shaft. Therefore, a space required behind the brake pedal to dispose the combined brake device can be made compact compared to that in a configuration that the center axis of the equalizer shaft is located backward/rearward of the center axis of the pedal shaft.

Additionally, in a vehicle side view, the center of the second connection portion is located on or backward/rearward of the imaginary straight line passing through the center of the first connection portion and the center axis of the equalizer shaft. Therefore, even when the center axis of the equalizer shaft is located forward of the center axis of the pedal shaft, change in angle between the equalizer and the rear brake transmission member connected to the second connection portion can be suppressed small compared to that in a configuration that the center of the second connection portion is located forward of the imaginary straight line. Accordingly, change in efficiency of transmitting an operating force and degradation in the comforts of brake operation can be inhibited.

The straddled vehicle may further include a silencer disposed behind the combined brake device. At least part of the combined brake device may be located between inner and outer ends of the silencer in a vehicle width direction. At least part of the combined brake device may be located between upper and lower ends of the silencer in a vehicle up-and-down direction. In this case, the center axis of the equalizer shaft may be located forward of the center axis of the pedal shaft, whereby interference of the combined brake device with the silencer can be easily avoided.

The combined brake device may further include/comprise a bracket. At least part of the bracket may be located backward/rearward of the center axis of the pedal shaft. In this case, the center axis of the equalizer shaft may be located forward of the center axis of the pedal shaft, whereby a space can be reliably produced behind the center axis of the pedal shaft in order to dispose the bracket.

A range vertically projected from the second connection portion may overlap at least part of the equalizer shaft in the vehicle side view when the brake pedal is in the zero stroke position. In this case, the second connection portion can be restricted from being disposed in a position forwardly or backwardly separated at an excessively large distance from the equalizer shaft. Accordingly, change in angle can be suppressed small.

A range vertically projected from the first connection portion may overlap at least part of the equalizer shaft in the vehicle side view when the brake pedal is in the zero stroke position. In this case, the first connection portion can be restricted from being disposed in a position forwardly or backwardly separated at an excessively large distance from the equalizer shaft. Accordingly, change in angle can be suppressed small.

The range vertically projected from the second connection portion may overlap at least part of the pedal shaft in the vehicle side view when the brake pedal is in the zero stroke position. In this case, the second connection portion can be restricted from being disposed in a position forwardly separated at an excessively large distance from the pedal shaft. Accordingly, change in angle can be suppressed small.

The range vertically projected from the first connection portion may overlap at least part of the pedal shaft in the vehicle side view when the brake pedal is in the zero stroke position. In this case, the first connection portion can be restricted from being disposed in a position forwardly separated at an excessively large distance from the pedal shaft. Accordingly, change in angle can be suppressed small.

The center of the second connection portion may be located forward of the center axis of the equalizer shaft in the vehicle side view when the brake pedal is in a rear brake maximum position in which the rear brake transmission member is maximally pulled. In this case, when the brake pedal is further operated from the rear brake maximum position, change in angle can be suppressed small.

The range vertically projected from the second connection portion may overlap at least part of the equalizer shaft in the vehicle side view when the brake pedal is in the rear brake maximum position in which the rear brake transmission member is maximally pulled. In this case, when the brake pedal is further operated from the rear brake maximum position, change in angle can be suppressed small.

The range vertically projected from the first connection portion may overlap at least part of the equalizer shaft in the vehicle side view when the brake pedal is in the rear brake maximum position in which the rear brake transmission member is maximally pulled. In this case, when the brake pedal is further operated from the rear brake maximum position, change in angle can be suppressed small.

The combined brake transmission member may backwardly/rearwardly extend from the first connection portion. In this case, the combined brake transmission member can be disposed by utilizing the space behind the combined brake device.

The center of the second connection portion may be located on the imaginary straight line in the vehicle side view. Alternatively, the center of the second connection portion may be located backward/rearward of the imaginary straight line in the vehicle side view.

### BRIEF DESCRIPTION OF DRAWINGS

Embodiments of the present invention will now be described by way of example only, and with relevance to the accompanying drawings, which are:
FIG. 1 a side view of a straddled vehicle according to a preferred embodiment;
FIG. 2 a schematic diagram showing a brake system of the straddled vehicle;
FIG. 3 a perspective view of a structure in the surroundings of a brake pedal and a combined brake device;
FIG. 4 a side view of the structure in the surroundings of the brake pedal and the combined brake device;
FIG. 5 a top view of the structure in the surroundings of the brake pedal and the combined brake device;
FIG. 6 a diagram showing a combined mechanism in a condition that the brake pedal is in a zero stroke position;
FIG. 7 a diagram showing the combined mechanism in the condition that the brake pedal is in the zero stroke position;
FIG. 8 a diagram showing the combined mechanism in the condition that the brake pedal is in the zero stroke position;
FIG. 9 a diagram showing the combined mechanism in a condition that the brake pedal is in a maximum rear brake position;
FIG. 10 a diagram showing the combined mechanism in the condition that the brake pedal is in the maximum rear brake position;
FIG. 11 a diagram showing the combined mechanism in a condition that the brake pedal is in a maximum front brake position;
FIG. 12 a diagram showing the combined mechanism in the condition that the brake pedal is in the maximum front brake position; and
FIG. 13 a side view of a combined mechanism according to another preferred embodiment.

### DETAILED DESCRIPTION OF PREFERRED EMBODIMENTS

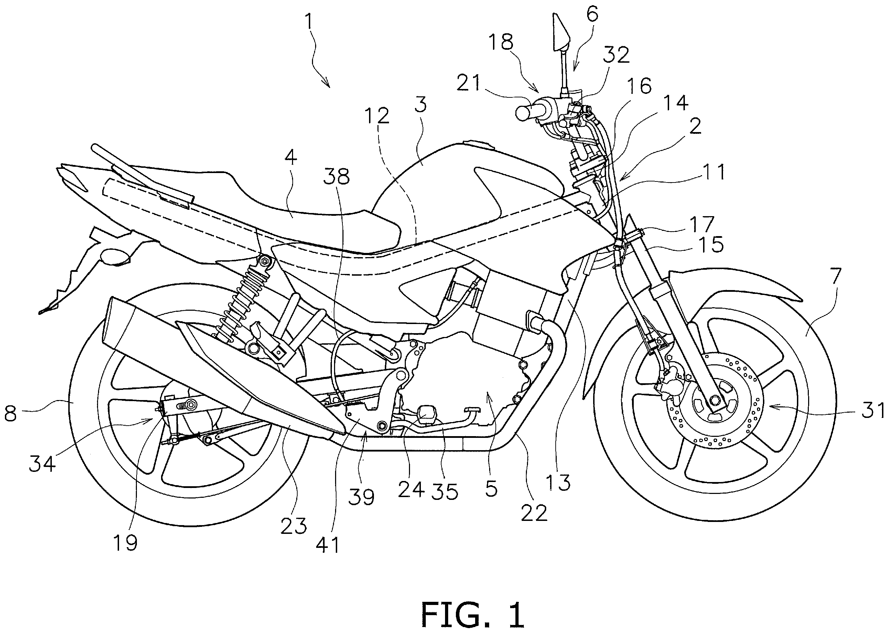

A straddled vehicle according to a preferred embodiment will be hereinafter described with reference to the accompanying drawings. FIG. 1 is a side view of a straddled vehicle 1 according to the preferred embodiment. The straddled vehicle 1 according to the present preferred embodiment is a motorcycle/motorbike. As shown in FIG. 1, the straddled vehicle 1 comprises a vehicle body frame 2, a fuel tank 3, a seat 4, an engine 5, a steering device 6, a front wheel 7 and a rear wheel 8.

The vehicle body frame 2 comprises a head pipe 11, an upper frame 12 and a lower frame 13. The head pipe 11 is disposed in the center of the vehicle in a vehicle width direction, and extends forward and downward. A headlight is disposed in front of the head pipe 11. It should be noted that the headlight is not shown in FIG. 1.

The upper frame 12 is connected to the head pipe 11 and extends backward from the head pipe 11. At least part of the lower frame 13 is disposed below the upper frame 12. The lower frame 13 is connected to the head pipe 11, and extends backward and downward from the head pipe 11.

It should be noted that the terms "front", "rear", "right" and "left" are defined as indicating directions seen from a rider (driver) seated on the seat 4. The expression "a given frame extends from the head pipe 11" encompasses a condition that the head pipe 11 and the given frame are directly connected to each other and a condition that the head pipe 11 and the given frame are indirectly connected to each other. The term "connection" is not limited to direct connection and encompasses indirect connection. Additionally, the term "connection" is not limited to a condition that separate members are fixed to each other, and encompasses a condition that a plurality of portions in an integrated member continue to each other.

The term "inward in the vehicle width direction" means directions that approach to the center of the straddled vehicle in the vehicle width direction. The term "outward in the vehicle width direction" means opposite directions to "inward in the vehicle width direction". In other words, the term "outward in the vehicle width direction" means directions that separate from the center of the straddled vehicle in the vehicle width direction.

The fuel tank 3 is disposed behind the head pipe 11. The seat 4 is disposed backward of the steering device 6. The seat 4 is disposed behind the fuel tank 3. The engine 5 is disposed below the fuel tank 3. The engine 5 is supported by the vehicle body frame 2. The engine 5 is disposed below at least part of the upper frame 12, while being disposed backward of at least part of the lower frame 13.

The steering device 6 is turnably supported by the head pipe 11. The steering device 6 comprises a steering shaft 14, right and left suspensions 15, an upper bracket 16, a lower bracket 17 and a handle member 18. The steering shaft 14 is inserted into the head pipe 11 and extends forward and downward.

The upper bracket 16 is disposed above the head pipe 11 and is connected to the steering shaft 14. The lower bracket 17 is disposed below the head pipe 11 and is connected to the steering shaft 14.

The handle member 18 is connected to the upper bracket 16 and is operable by the driver with his/her hands. The handle member 18 includes right and left grips 21. It should be noted that FIG. 1 shows only the right grip 21 of the right and left grips 21. The right and left grips 21 are portions to be held by the driver.

The right and left suspensions 15 extend forward and downward. It should be noted that FIG. 1 shows only the right suspension 15 of the right and left suspensions 15. The right and left suspensions 15 support the front wheel 7 such that the front wheel 7 is rotatable. The front wheel 7 is disposed forward of the engine 5.

The rear wheel 8 is supported by the vehicle body frame 2 through a swing arm 19. The swing arm 19 is swingably attached to the vehicle body frame 2. Alternatively, the swing arm 19 may be swingably attached to the engine 5. The rear wheel 8 is disposed backward of the front wheel 7. The rear wheel 8 is disposed backward of the engine 5.

The straddled vehicle 1 comprises an exhaust pipe 22 and a silencer 23. The exhaust pipe 22 extends from a position in front of the engine 5, then passes through a position below the engine 5, and extends backward. The silencer 23 is connected to the exhaust pipe 22. The silencer 23 is disposed backward of the engine 5. The silencer 23 is disposed sideward of the rear wheel 8. In the vehicle side view, the silencer 23 overlaps the rear wheel 8.

The straddled vehicle 1 comprises right and left steps 24. It should be noted that FIG. 1 shows only the right step 24 of the right and left steps 24. The right and left steps 24 are members on which the driver puts his/her feet. The right and left steps 24 protrude outward of the engine 5 in the vehicle width direction. The right and left steps 24 are attached to the bottom surface of the engine 5. Alternatively, the right and left steps 24 may be attached to the vehicle body frame 2.

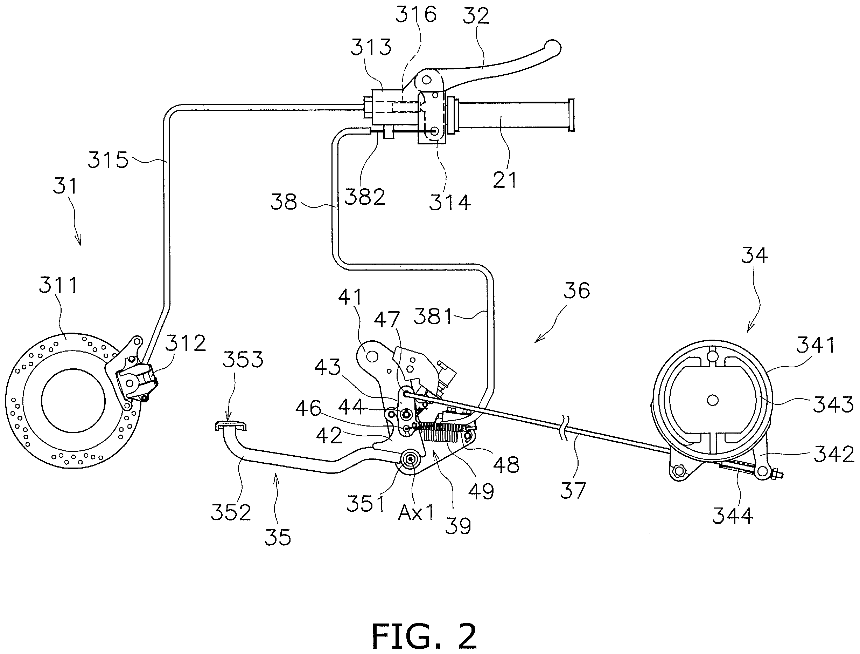

Next, the brake system of the straddled vehicle 1 will be explained. FIG. 2 is a schematic diagram showing a configuration of the brake system. As shown in FIG. 2, the brake system comprises a front brake device 31, a brake lever 32, a rear brake device 34, a brake pedal 35 and a combined brake device 36.

The front brake device 31 brakes the front wheel 7 in response to operating the brake lever 32. The front brake device 31 is a device of a disc brake type. The front brake device 31 includes a brake disc 311, a brake caliper 312, a master cylinder 313, a pressing member 314 and a front brake transmission member 315. The brake disc 311 is attached to the front wheel 7. The brake caliper 312 is actuated by fluid pressure and generates a braking force by interposing the brake disc 311 therein.

The master cylinder 313 converts the operating force of the brake lever 32 into the fluid pressure. The front brake transmission member 315 connects the master cylinder 313 and the brake caliper 312 therethrough. The front brake transmission member 315 is a tube that transmits the fluid pressure of the master cylinder 313 to the brake caliper 312.

In conjunction with the brake lever 32 operated by the driver, the pressing member 314 is actuated so as to press a piston 316 of the master cylinder 313. Accordingly, brake fluid inside the master cylinder 313 is pressurized, and the fluid pressure thereof is transmitted to the brake caliper 312 through the front brake transmission member 315. The brake caliper 312 is actuated by the fluid pressure so as to interpose the brake disc 311 therein. Accordingly, the front wheel 7 is braked.

The rear brake device 34 brakes the rear wheel 8 in response to operating the brake pedal 35. The rear brake device 34 is a drum brake attached to the rear wheel 8. The rear brake device 34 comprises a drum 341, a brake arm 342 and a brake shoe 343. The drum 341 is attached to the rear wheel 8 and is rotated together with the rear wheel 8. The brake arm 342 is pulled in conjunction with the brake pedal 35 operated by the driver, whereby the brake shoe 343 is pressed onto the drum 341. Accordingly, the rear wheel 8 is braked.

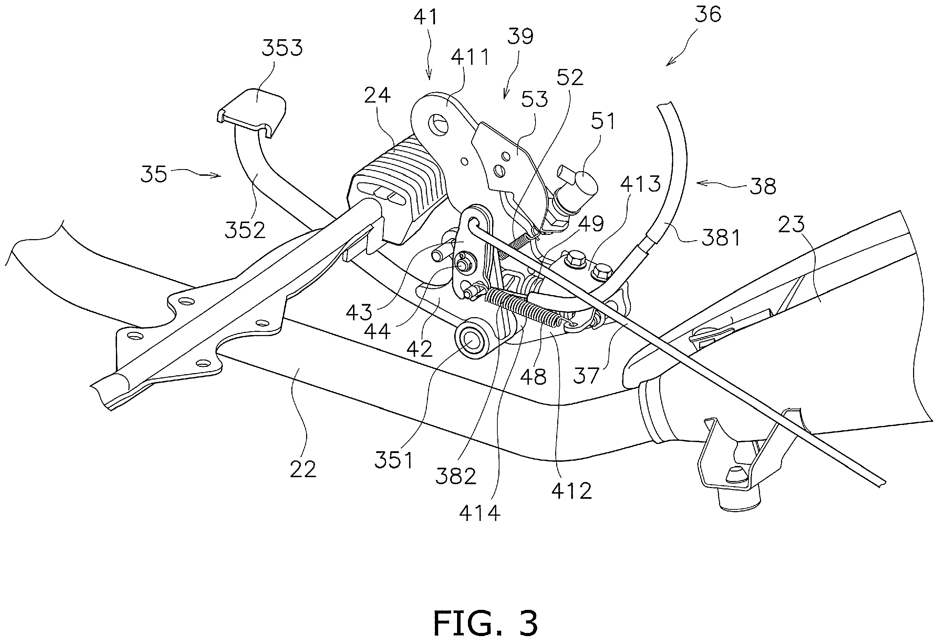

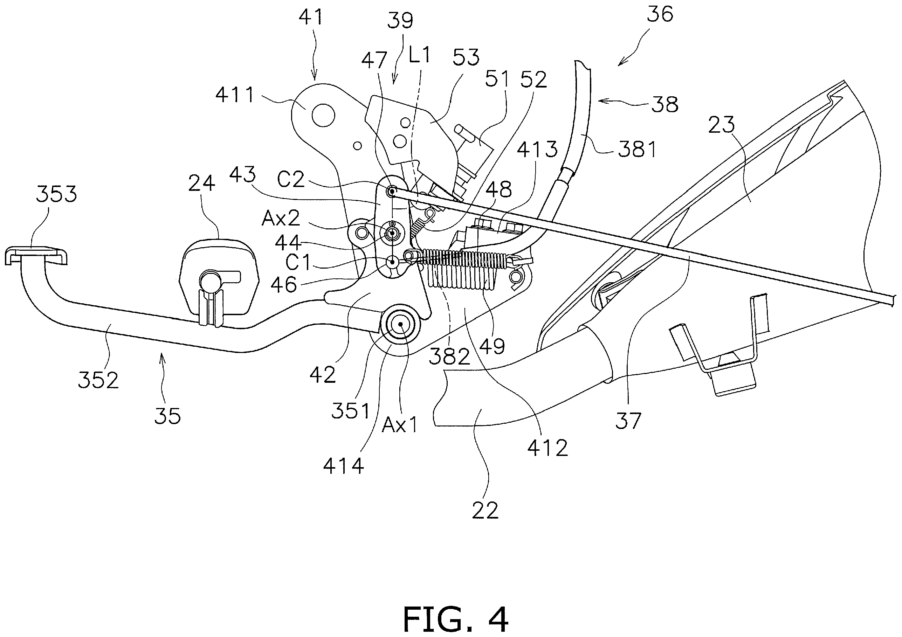

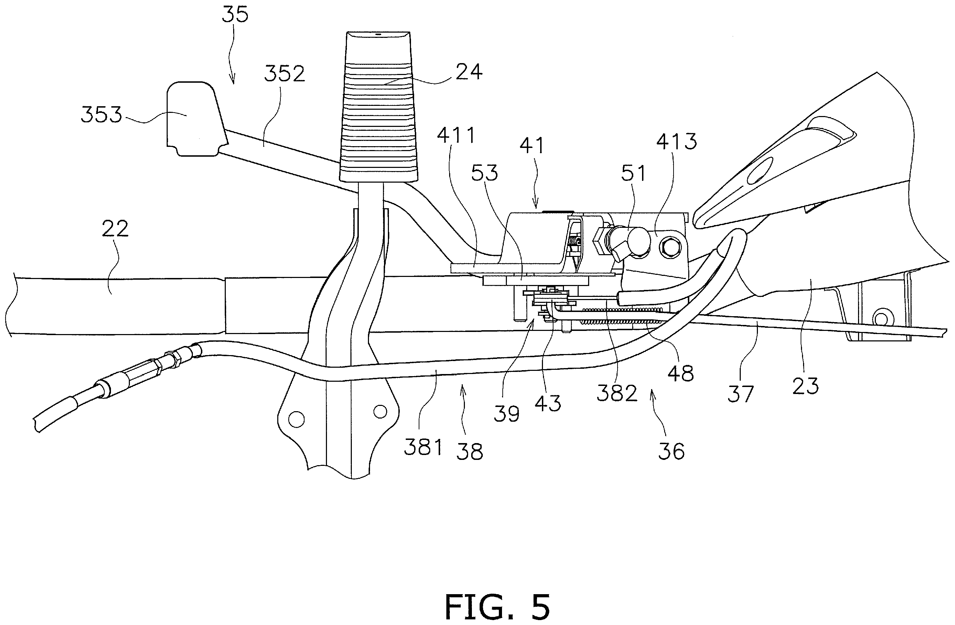

FIG. 3 is a perspective view of a structure in the surroundings of the brake pedal 35 and the combined brake device 36. FIG. 4 is a side view of the structure in the surroundings of the brake pedal 35 and the combined brake device 36. FIG. 5 is a top view of the structure in the surroundings of the brake pedal 35 and the combined brake device 36.

The brake pedal 35 is a member to be operated by the driver with his/her foot. The brake pedal 35 is rotatably attached to the vehicle body frame 2. The brake pedal 35 is attached to the vehicle body frame 2 through a bracket 41 to be described. The brake pedal 35 is disposed below the seat 4.

The brake pedal 35 is rotatable about a rotational axis Ax1 (hereinafter referred to as "pedal rotational axis Ax1") of the brake pedal 35. The brake pedal 35 is operated from a zero stroke position to a full stroke position. The zero stroke position means a position of the brake pedal 35 not being pressed down by the driver. On the other hand, the full stroke position means a position of the brake pedal 35 maximally pressed down by the driver.

Detailedly, the brake pedal 35 includes a pedal shaft 351 and a pedal body 352. The pedal shaft 351 is supported by the vehicle body frame 2 through the bracket 41. The pedal rotational axis Ax1 is the center axis of the pedal shaft 351.

The pedal body 352 forwardly extends from the pedal shaft 351. The pedal body 352 includes a tread surface 353 on the tip thereof. The tread surface 353 of the brake pedal 35 is disposed in front of the step 24.

The brake pedal 35 is connected to a rear brake transmission member 37 to be described through the combined brake device 36. The rear brake transmission member 37 pulls the brake arm 342 in conjunction with the brake pedal 35 operated by the driver, whereby the brake shoe 343 is pressed onto the drum 341.

The combined brake device 36 causes the rear brake device 34 and the front brake device 31 to be actuated in a linked manner in response to operating the brake pedal 35. The combined brake device 36 includes the rear brake transmission member 37, a combined brake transmission member 38, a combined actuation mechanism 39 and the bracket 41.

The combined brake transmission member 38 is connected to the front brake device 31. The combined brake transmission member 38 includes an outer tube 381 and an inner cable 382 disposed inside the outer tube 381. The inner cable 382 of the combined brake transmission member 38 is connected to the pressing member 314 of the front brake device 31.

The rear brake transmission member 37 is connected to the brake arm 342 of the rear brake device 34. The rear brake transmission member 37 is, for instance, a brake rod. It should be noted that the rear brake transmission member 37 may be a brake cable.

The combined actuation mechanism 39 is connected to the brake pedal 35. The combined actuation mechanism 39 is connected to the front brake device 31 through the combined brake transmission member 38. The combined actuation mechanism 39 is connected to the rear brake device 34 through the rear brake transmission member 37. The combined actuation mechanism 39 transmits the motion of the brake pedal 35 to the rear brake device 34 and the front brake device 31.

When both the brake lever 32 and the brake pedal 35 are in the zero stroke positions, the front brake device 31 is kept in an unbraked state. When either the brake lever 32 or the brake pedal 35 is operated, the pressing member 314 is actuated whereby the front brake device 31 is turned into a braked state. The rear brake device 34 includes a rear urging member 344. The rear urging member 344 urges the brake arm 342 in a direction to turn the rear brake device 34 into the unbraked state. Accordingly, when the brake pedal 35 is in the zero stroke position, the rear brake device 34 is kept in the unbraked state by the urging force of the rear urging member 344.

When the brake pedal 35 is operated, the brake arm 342 is actuated against the urging force of the rear urging member 344, whereby the rear brake device 34 is turned into the braked state. It should be noted that in the present preferred embodiment, the rear urging member 344 of the rear brake device 34 is a coil spring. However, any suitable member other than the coil spring may be used as the rear urging member 344.

As shown in FIG. 1, the combined actuation mechanism 39 is disposed backward of at least part of the engine 5. The combined actuation mechanism 39 may be disposed backward of the rear end of the engine 5. Alternatively, the combined actuation mechanism 39 may be disposed backward of the front end of the engine 5 while being disposed forward of the rear end of the engine 5.

The aforementioned silencer 23 is disposed behind the combined actuation mechanism 39. In other words, in a vehicle rear view, at least part of the combined actuation mechanism 39 overlaps the silencer 23. The combined actuation mechanism 39 is disposed above the exhaust pipe 22. As shown in FIG. 5, at least part of the combined actuation mechanism 39 overlaps the exhaust pipe 22.

The combined actuation mechanism 39 includes a pedal arm 42, an equalizer 43 and an equalizer shaft 44. The pedal arm 42 is attached to the brake pedal 35. The pedal arm 42 is rotated about the pedal rotational axis Ax1 together with the brake pedal 35. When the brake pedal 35 is in the zero stroke position, the pedal arm 42 upwardly extends from the pedal shaft 351.

It should be noted that a switch 51 for lighting up a taillight is connected to the pedal arm 42. The switch 51 is connected to the pedal arm 42 through a coil spring 52. The switch 51 is supported by a support member 53 fixed to the bracket 41. It should be noted that the switch 51 may not be provided. Alternatively, the switch 51 may be disposed in a position separated from the combined actuation mechanism 39.

The equalizer 43 is rotatably attached to the pedal arm 42 through the equalizer shaft 44. The equalizer shaft 44 supports the equalizer 43 such that the equalizer 43 is rotatable with respect to the brake pedal 35. The equalizer 43 comprises a first connection portion 46 and a second connection portion 47.

The first connection portion 46 is located below the equalizer shaft 44. The second connection portion 47 is located above the equalizer shaft 44. The combined brake transmission member 38 is connected to the first connection portion 46. Detailedly, the inner cable 382 of the combined brake transmission member 38 is connected to the first connection portion 46. The first connection portion 46 is, for instance, a pin member attached to the equalizer 43. Alternatively, the first connection portion 46 may be a portion integrated with the equalizer 43. The combined brake transmission member 38 backwardly extends from the first connection portion 46.

As shown in FIG. 4, in the vehicle side view, a center C2 of the second connection portion 47 is located on an imaginary straight line L1 that passes through a center C1 of the first connection portion 46 and a center axis Ax2 of the equalizer shaft 44. In other words, in the vehicle side view, the center C2 of the second connection portion 47, the center Ax2 of the equalizer shaft 44 and the center C1 of the first connection portion 46 are disposed in straight alignment. The equalizer 43 has a shape extending along the imaginary straight line L1.

The rear brake transmission member 37 is connected to the second connection portion 47. The rear brake transmission member 37 backwardly extends from the second connection portion 47. The second connection portion 47 is, for instance, a hole provided in the equalizer 43, and an end of the rear brake transmission member 37 is inserted therein and is locked thereto. Alternatively, the second connection portion 47 may be a pin member attached to the equalizer 43. Yet alternatively, the second connection portion 47 may be a portion integrated with the equalizer 43.

The motion of the brake pedal 35 is transmitted to the equalizer 43 through the pedal arm 42. The equalizer 43 pulls the rear brake transmission member 37 and the combined brake transmission member 38 in conjunction with the motion of the brake pedal 35. Accordingly, the equalizer 43 distributes the operating force of the brake pedal 35 to the front brake device 31 and the rear brake device 34.

The combined actuation mechanism 39 comprises an equalizer urging member 48. The equalizer urging member 48 is attached to the equalizer 43. The equalizer urging member 48 urges the equalizer 43 in a direction to turn the front brake device 31 into the unbraked state.

The combined actuation mechanism 39 includes a pedal urging member 49. The pedal urging member 49 is attached to the brake pedal 35. The pedal urging member 49 urges the brake pedal 35 toward the zero stroke position.

At least part of the bracket 41 is located backward of the pedal rotational axis Ax1. The bracket 41 is disposed outward of the other members of the combined actuation mechanism 39 in the vehicle width direction. In the vehicle side view, the bracket 41 overlaps with at least part of the other members of the combined actuation mechanism 39. Detailedly, the bracket 41 includes a first lateral surface portion 411, a second lateral surface portion 412 and an upper surface portion 413. The first lateral surface portion 411 includes a support portion 414 for the pedal shaft 351. The first lateral surface portion 411 upwardly extends from the support portion 414. The second lateral surface portion 412 backwardly extends from a lower portion of the first lateral surface portion 411. The rear end of the second lateral surface portion 412 is located backward of the pedal rotational axis Ax1. The upper surface portion 413 inwardly extends from an upper portion of the second lateral surface portion 412 in the vehicle width direction. The upper surface portion 413 is located backward of the pedal rotational axis Ax1.

For example, in the vehicle side view, the bracket 41 overlaps at least part of the pedal arm 42. In the vehicle side view, the bracket 41 overlaps at least part of the equalizer urging member 48. In the vehicle side view, the bracket 41 overlaps at least part of the pedal urging member 49. Detailedly, in the vehicle side view, the first lateral surface portion 411 overlaps at least part of the pedal arm 42. In the vehicle side view, the first lateral surface portion 411 overlaps at least part of the equalizer 43. In the vehicle side view, the second lateral surface portion 412 overlaps at least part of both the equalizer urging member 48 and the pedal urging member 49.

The silencer 23 is disposed behind the bracket 41. In the vehicle rear view, at least part of the bracket 41 overlaps the silencer 23. The silencer 23 is disposed behind the combined brake transmission member 38. In the vehicle rear view, at least part of the combined brake transmission member 38 overlaps the silencer 23.

Detailedly, at least part of the bracket 41 is located between the inner and outer ends of the silencer 23 in the vehicle width direction. In other words, the bracket 41 includes a portion located in the same position as the silencer 23 in the vehicle width direction. At least part of the combined actuation mechanism 39 is located between the upper and lower ends of the silencer 23 in a vehicle up-and-down direction. In other words, the bracket 41 includes a portion located in the same position as the silencer 23 in the vehicle up-and-down direction.

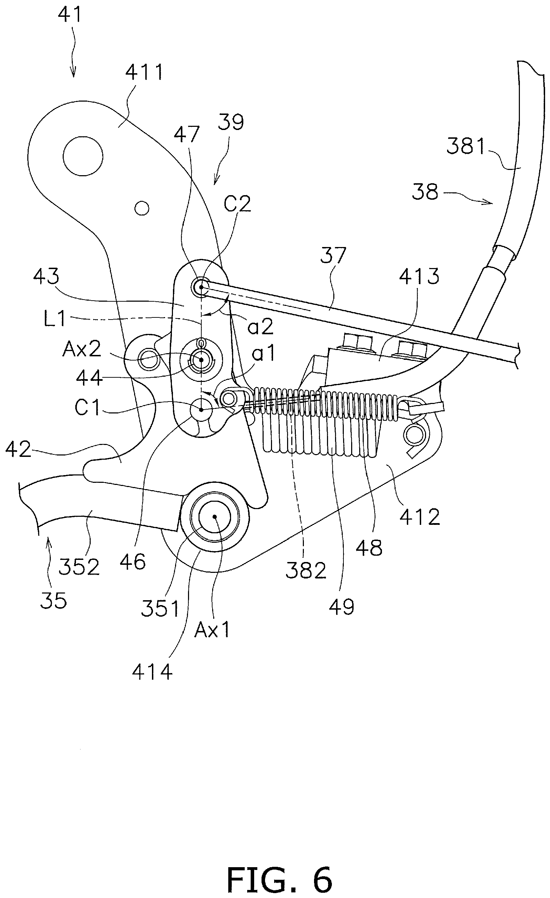

FIGS. 6 to 8 are diagrams showing the combined actuation mechanism 39 in a condition that the brake pedal 35 is in the zero stroke position. It should be noted that for easy understanding, the switch 51, the coil spring 52 and the support member 53 are not shown in the diagrams of FIG. 6 and thereafter.

As shown in FIG. 6, when the brake pedal 35 is in the zero stroke position, the center C1 of the first connection portion 46 is located forward of the pedal rotational axis Ax1. When the brake pedal 35 is in the zero stroke position, the center C2 of the second connection portion 47 is located forward of the pedal rotational axis Ax1. When the brake pedal 35 is in the zero stroke position, the center axis Ax2 of the equalizer shaft 44 is located forward of the pedal rotational axis Ax1.

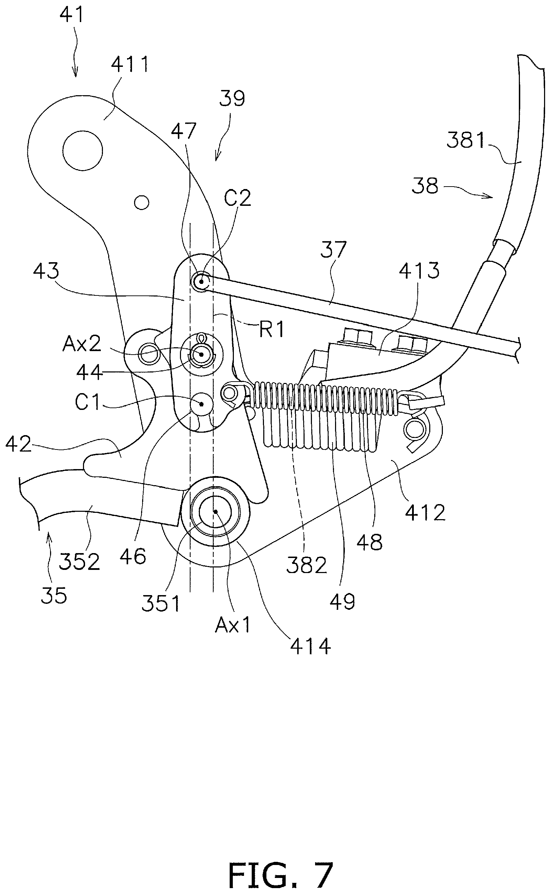

As shown in FIG. 7, when the brake pedal 35 is in the zero stroke position, a range R1 vertically projected from the first connection portion 46 overlaps at least part of the equalizer shaft 44 in the vehicle side view. It should be noted that in the vehicle side view, the projected range R1 is a range between an imaginary vertical line passing through the front end of the first connection portion 46 and that passing through the rear end of the first connection portion 46. When the brake pedal 35 is in the zero stroke position, the vertically projected range R1 from the first connection portion 46 overlaps at least part of the pedal shaft 351 in the vehicle side view. When the brake pedal 35 is in the zero stroke position, the vertically projected range R1 from the first connection portion 46 overlaps at least part of the second connection portion 47 in the vehicle side view.

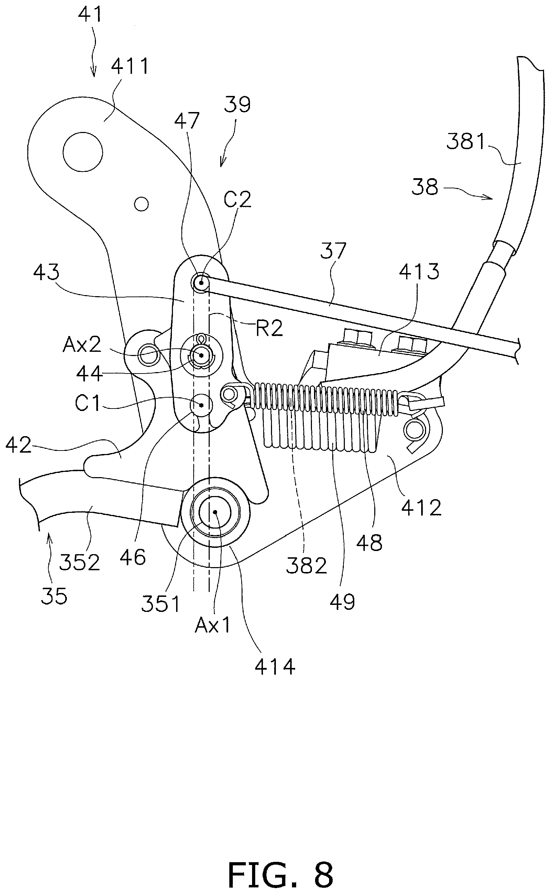

As shown in FIG. 8, when the brake pedal 35 is in the zero stroke position, a range R2 vertically projected from the second connection portion 47 overlaps at least part of the equalizer shaft 44 in the vehicle side view. It should be noted that the projected range R2 is a range between an imaginary vertical line passing through the front end of the second connection portion 47 and that passing through the rear end of the second connection portion 47 in the vehicle side view. When the brake pedal 35 is in the zero stroke position, the vertically projected range R2 from the second connection portion 47 overlaps at least part of the pedal shaft 351 in the vehicle side view.

As shown in FIG. 6, when the brake pedal 35 is in the zero stroke position, an angle a2 formed between the rear brake transmission member 37 and the imaginary straight line L1 of the equalizer 43 is an acute angle in the vehicle side view. When the brake pedal 35 is in the zero stroke position, an angle a1 formed between the combined brake transmission member 38 and the imaginary straight line L1 of the equalizer 43 is an acute angle in the vehicle side view.

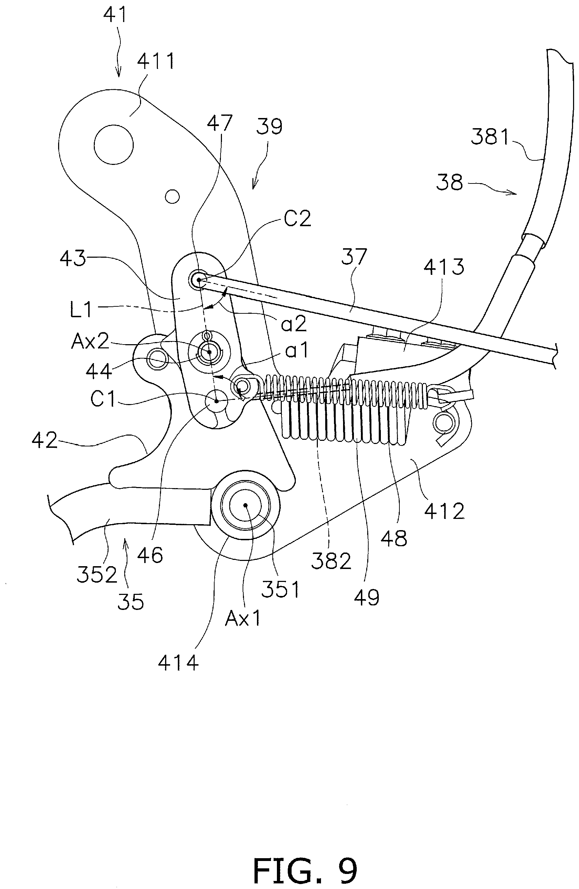

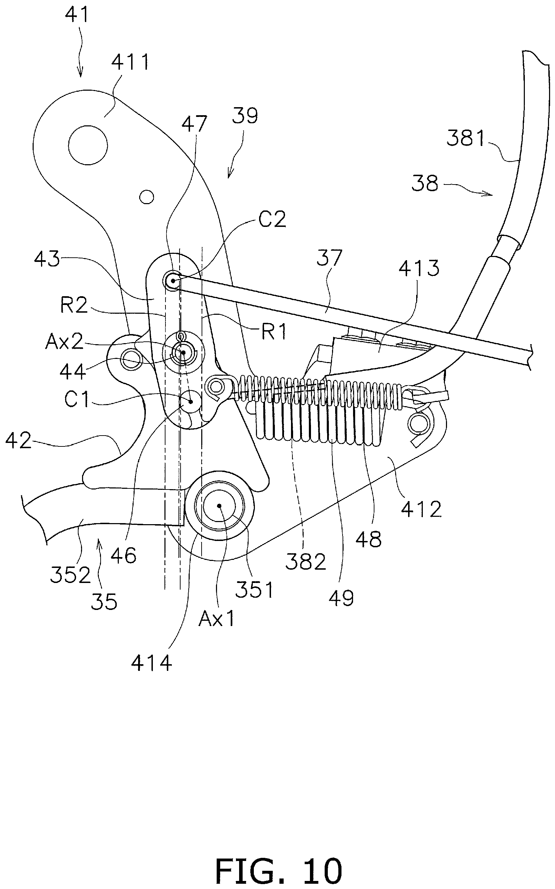

FIGS. 9 and 10 are diagrams showing the combined actuation mechanism 39 in a condition that the brake pedal 35 is in a rear brake maximum position in which the rear brake transmission member 37 is maximally pulled. As shown in FIG. 9, when the brake pedal 35 is in the rear brake maximum position, the center C1 of the first connection portion 46 is located forward of the pedal rotational axis Ax1 in the vehicle side view. When the brake pedal 35 is in the rear brake maximum position, the center axis Ax2 of the equalizer shaft 44 is located forward of the pedal rotational axis Ax1 in the vehicle side view. When the brake pedal 35 is in the rear brake maximum position, the center C2 of the second connection portion 47 is located forward of the pedal rotational axis Ax1 in the vehicle side view.

When the brake pedal 35 is in the rear brake maximum position, the center C1 of the first connection portion 46 is located backward of the center axis Ax2 of the equalizer shaft 44 in the vehicle side view. When the brake pedal 35 is in the rear brake maximum position, the center C2 of the second connection portion 47 is located forward of the center axis Ax2 of the equalizer shaft 44 in the vehicle side view.

As shown in FIG. 10, when the brake pedal 35 is in the rear brake maximum position, the vertically projected range R1 from the first connection portion 46 overlaps at least part of the equalizer shaft 44 in the vehicle side view. When the brake pedal 35 is in the rear brake maximum position, the vertically projected range R1 from the first connection portion 46 overlaps at least part of the second connection portion 47 in the vehicle side view. When the brake pedal 35 is in the rear brake maximum position, the vertically projected range R1 from the first connection portion 46 does not overlap the pedal shaft 351 in the vehicle side view.

When the brake pedal 35 is in the rear brake maximum position, the vertically projected range R2 from the second connection portion 47 overlaps at least part of the equalizer shaft 44 in the vehicle side view. When the brake pedal 35 is in the rear brake maximum position, the vertically projected range R2 from the second connection portion 47 does not overlap the pedal shaft 351 in the vehicle side view.

As shown in FIG. 9, when the brake pedal 35 is in the rear brake maximum position, the angle a2 formed between the rear brake transmission member 37 and the imaginary straight line L1 of the equalizer 43 is an acute angle in the vehicle side view. When the brake pedal 35 is in the rear brake maximum position, the angle a1 formed between the combined brake transmission member 38 and the imaginary straight line L1 of the equalizer 43 is an obtuse angle in the vehicle side view.

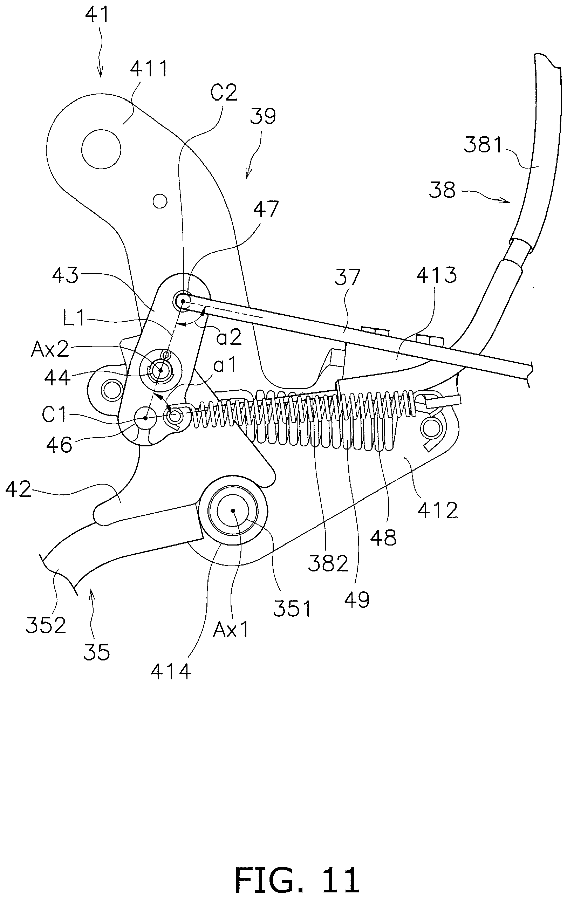

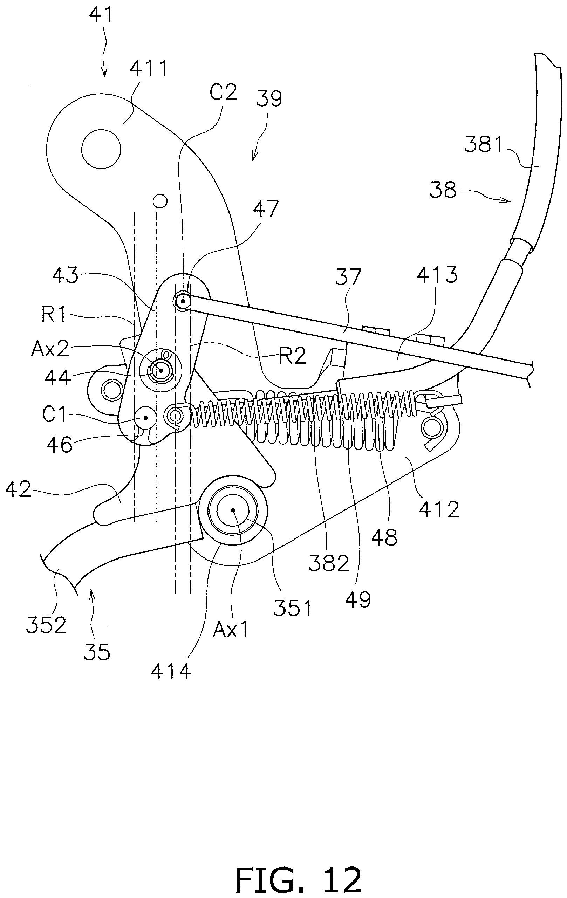

FIGS. 11 and 12 are diagrams showing the combined actuation mechanism 39 in a condition that the brake pedal 35 is in a front brake maximum position in which the combined brake transmission member 38 is maximally pulled. It should be noted that the front brake maximum position may be the full stroke position. Alternatively, the front brake maximum position may be a position from which clearance is left to the full stroke position.

As shown in FIG. 11, when the brake pedal 35 is in the front brake maximum position, the center C1 of the first connection portion 46 is located forward of the pedal rotational axis Ax1 in the vehicle side view. When the brake pedal 35 is in the front brake maximum position, the center axis Ax2 of the equalizer shaft 44 is located forward of the pedal rotational axis Ax1 in the vehicle side view. When the brake pedal 35 is in the front brake maximum position, the center C2 of the second connection portion 47 is located forward of the pedal rotational axis Ax1 in the vehicle side view.

When the brake pedal 35 is in the front brake maximum position, the center C1 of the first connection portion 46 is located forward of the center axis Ax2 of the equalizer shaft 44 in the vehicle side view. When the brake pedal 35 is in the front brake maximum position, the center C2 of the second connection portion 47 is located backward of the center axis Ax2 of the equalizer shaft 44 in the vehicle side view.

As shown in FIG. 12, when the brake pedal 35 is in the front brake maximum position, the vertically projected range R1 from the first connection portion 46 overlaps at least part of the equalizer shaft 44 in the vehicle side view. When the brake pedal 35 is in the front brake maximum position, the vertically projected range R1 from the first connection portion 46 does not overlap the second connection portion 47 in the vehicle side view. When the brake pedal 35 is in the front brake maximum position, the vertically projected range R1 from the first connection portion 46 does not overlap the pedal shaft 351 in the vehicle side view.

When the brake pedal 35 is in the front brake maximum position, the vertically projected range R2 from the second connection portion 47 does not overlap the equalizer shaft 44 in the vehicle side view. When the brake pedal 35 is in the front brake maximum position, the vertically projected range R2 from the second connection portion 47 does not overlap the pedal shaft 351 in the vehicle side view.

As shown in FIG. 11, when the brake pedal 35 is in the front brake maximum position, the angle a2 formed between the rear brake transmission member 37 and the imaginary straight line L1 of the equalizer 43 is an obtuse angle in the vehicle side view. When the brake pedal 35 is in the front brake maximum position, the angle a1 formed between the combined brake transmission member 38 and the imaginary straight line L1 of the equalizer 43 is an acute angle in the vehicle side view.

In the straddled vehicle according to the present preferred embodiment explained above, when the brake pedal 35 is in the zero stroke position, the center axis Ax2 of the equalizer shaft 44 is located forward of the pedal rotational axis Ax1. Therefore, a space required behind the brake pedal 35 to dispose the combined brake device 36 can be made compact compared to a configuration that the center axis Ax2 of the equalizer shaft 44 is located backward of the pedal rotational axis Ax1.

Additionally, in the vehicle side view, the center C2 of the second connection portion 47 is located on the imaginary straight line L1 that passes through the center C1 of the first connection portion 46 and the center axis Ax2 of the equalizer shaft 44. Therefore, even when the center axis Ax2 of the equalizer shaft 44 is located forward of the pedal rotational axis Ax1, change in angle a2 formed between the equalizer 43 and the rear brake transmission member 37 connected to the second connection portion 47 can be suppressed small compared to that in a configuration that the center C2 of the second connection portion 47 is located forward of the imaginary straight line L1. Additionally, change in angle a1 between the equalizer 43 and the combined brake transmission member 38 connected to the first connection portion 46 can be suppressed small compared to that in a configuration that the center C1 of the first connection portion 46 is located forward of the imaginary straight line L1. Accordingly, change in efficiency of transmitting the operating force and degradation in the comforts of brake operation can be inhibited.

In the vehicle rear view, at least part of the combined brake device 36 overlaps the silencer 23. However, the center axis Ax2 of the equalizer shaft 44 is located forward of the pedal rotational axis Ax1, whereby interference of the combined brake device 36 with the silencer 23 can be easily avoided.

At least part of the bracket 41 of the combined brake device 36 is located backward of the pedal rotational axis Ax1. However, the center axis Ax2 of the equalizer shaft 44 is located forward of the pedal rotational axis Ax1, whereby a space can be reliably produced behind the pedal rotational axis Ax1 in order to dispose the bracket 41.

The combined brake transmission member 38 backwardly extends from the first connection portion 46. However, the center axis Ax2 of the equalizer shaft 44 is located forward of the pedal rotational axis Ax1, whereby the combined brake transmission member 38 can be disposed by utilizing the space behind the combined brake device 36.

When the brake pedal 35 is in the zero stroke position, the vertically projected range R2 from the second connection portion 47 overlaps at least part of the equalizer shaft 44 in the vehicle side view. Therefore, the second connection portion 47 can be restricted from being disposed in a position forwardly or backwardly separated at an excessively large distance from the equalizer shaft 44. Accordingly, change in angle a2 can be suppressed small.

When the brake pedal 35 is in the zero stroke position, the vertically projected range R1 from the first connection portion 46 overlaps at least part of the equalizer shaft 44 in the vehicle side view. Therefore, the first connection portion 46 can be restricted from being disposed in a position forwardly or backwardly separated at an excessively large distance from the equalizer shaft 44. Accordingly, change in angle a1 can be suppressed small.

When the brake pedal 35 is in the zero stroke position, the vertically projected range R2 from the second connection portion 47 overlaps at least part of the pedal shaft 351 in the vehicle side view. Therefore, the second connection portion 47 can be restricted from being disposed in a position forwardly separated at an excessively large distance from the pedal shaft 351. Accordingly, change in angle a2 can be suppressed small.

When the brake pedal 35 is in the zero stroke position, the vertically projected range R1 from the first connection portion 46 overlaps at least part of the pedal shaft 351 in the vehicle side view. Therefore, the first connection portion 46 can be restricted from being disposed in a position forwardly separated at an excessively large distance from the pedal shaft 351. Accordingly, change in angle a1 can be suppressed small.

When the brake pedal 35 is in the rear brake maximum position, the center C2 of the second connection portion 47 is located forward of the center axis Ax2 of the equalizer shaft 44 in the vehicle side view. Therefore, when the brake pedal 35 is further operated from the rear brake maximum position, change in angle a2 can be suppressed small.

When the brake pedal 35 is in the rear brake maximum position, the vertically projected range R2 from the second connection portion 47 overlaps at least part of the equalizer shaft 44 in the vehicle side view. Therefore, when the brake pedal 35 is further operated from the rear brake maximum position, change in angle a2 can be suppressed small.

When the brake pedal 35 is in the rear brake maximum position, the vertically projected range R1 from the first connection portion 46 overlaps at least part of the equalizer shaft 44 in the vehicle side view. Therefore, when the brake pedal 35 is further operated from the rear brake maximum position, change in angle a1 can be suppressed small.

One preferred embodiment of the present invention has been explained above. However, the present invention is not limited to the aforementioned preferred embodiment, and a variety of changes can be made without departing from the gist of the present invention.

The straddled vehicle 1 is not limited to the motorcycle, and encompasses the other types of vehicle such as an all-terrain vehicle. The number of the front wheels (7) is not limited to one, and alternatively, may be two or greater. The number of the rear wheels (8) is not limited to one, and alternatively, may be two or greater.

The configuration of the front brake device 31 is not limited to that of the aforementioned preferred embodiment, and may be changed within the scope of the appended claims. For example, the front brake device 31 is not limited to the disc brake, and may be another type of brake such as a drum brake. The configuration of the rear brake device 34 is not limited to that of the aforementioned preferred embodiment, and may be changed. For example, the rear brake device 34 is not limited to the drum brake, and may be another type of brake such as a disc brake.

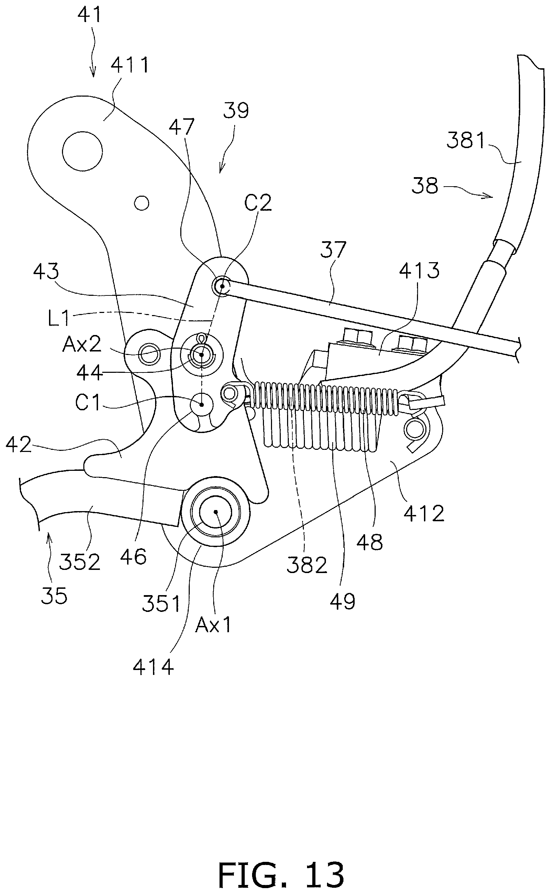

The configuration of the combined brake device 36 is not limited to that of the aforementioned preferred embodiment, and may be changed within the scope of the appended claims. The shape or position of the equalizer 43 may be changed within the scope of the appended claims. For example, as shown in FIG. 13, the center C2 of the second connection portion 47 may be located backward of the imaginary straight line L1 in the vehicle side view. The first connection portion 46 may be disposed above the equalizer shaft 44, whereas the second connection portion 47 may be disposed below the equalizer shaft 44.

The layout of the first connection portion 46, the second connection portion 47, the equalizer shaft 44 and the pedal shaft 351 may be changed within the scope of the appended claims. The angle a1 formed between the imaginary straight line L1 of the equalizer 43 and the combined brake transmission member 38 may be changed within the scope of the appended claims. The angle a2 formed between the imaginary straight line L1 of the equalizer 43 and the rear brake transmission member 37 may be changed within the scope of the appended claims.

The terms and expressions, as used herein, are provided for the purpose of explanation, not of limitation to interpretation. It is to be recognized that there is no intention to exclude any equivalents of the features herein illustrated and described, and various modifications are possible within the scope of the appended claims. The present invention as defined by the appended claims can be embodied in many different forms within the scope of the appended claims. The present disclosure should be considered to provide the principle embodiments of the present invention as defined in the appended claims. Those embodiments are herein described with the understanding of not intending to limit the present invention to the embodiments herein described and/or illustrated. Thus, the present invention is not to be limited to those embodiments herein described. A limitation in a claim should be broadly interpreted based on terms used in the claim, and should not be limited to any of the embodiments described in the present specification or during prosecution of the present application.

Although an embodiment of the present invention has been described, the above-illustrated embodiment is merely an example for carrying out the present invention. Therefore, the present invention is not limited to the above-illustrated embodiment.

For example, the above-illustrated embodiment was described where a motorcycle was discussed as an example of the straddled vehicle; alternatively, the straddled vehicle may be any leaning vehicle where the vehicle body can lean toward the direction to which the vehicle turns. The straddled vehicle may have one front wheel or two front wheels. The straddled vehicle may have one rear wheel or two rear wheels.

It will be appreciated that the term straddled vehicle or motor vehicle used herein, and as used in the art, is meant to include at least the following terms also used in the art:
straddled vehicle, straddle-type vehicle, saddle-straddling type vehicle or motor vehicle, and includes: motorcycles and motorbikes as well as motor tricycles, quad bikes and All Terrain Vehicles (ATVs), scooters and mopeds.

## Claims

1. A straddled vehicle (1) comprising:
a vehicle body frame (12) comprising a head pipe (11);
a steering device (16) comprising a handle member (18) manually operable by a rider, the steering device (16) being turnably supported by the head pipe (11);
a seat (14) on which the rider is seatable, the seat (14) being disposed rearward of the steering device (16);
a front wheel (12) rotatably supported by the steering device (16);
a rear wheel (8) disposed backward of the front wheel (12);
a front brake device (31) for braking the front wheel (12);
a rear brake device (34) for braking the rear wheel (8);
a brake pedal (35) disposed below the seat (14), the brake pedal (35) being operated with a foot of the driver;
a pedal shaft (351) supporting the brake pedal (35) such that the brake pedal (35) is rotatable with respect to the vehicle frame (12); and
a combined brake device (36) which, in use, causes the rear brake device (34) and the front brake device (31) to be actuated in a linked manner in response to operating the brake pedal (35), wherein
the combined brake device (36) comprising:
a combined brake transmission member (38) connected to the front brake device (31),
a rear brake transmission member (37) connected to the rear brake device (34),
an equalizer (43), and
an equalizer shaft (44) supporting the equalizer (43) such that the equalizer (43) is rotatable with respect to the brake pedal (35),
the equalizer (43) comprising:
a first connection portion (46) to which the combined brake transmission member (38) is connected, and a second connection portion (47) to which the rear brake transmission member (37) is connected, the rear brake transmission member (37) backwardly extending from the second connection portion (47), wherein
a center axis (Ax2) of the equalizer shaft (44) is located forward of a center axis (Ax1) of the pedal shaft (351) when the brake pedal (35) is in a zero stroke position, and
a center (C2)of the second connection portion (47) is located on or rearward of an imaginary straight line (L1) passing through a center (C1) of the first connection portion (46) and the center axis (Ax2) of the equalizer shaft (44) in a vehicle side view.

2. The straddled vehicle (1) according to claim 1, further comprising:
a silencer (23) disposed behind the combined brake device (36), wherein
at least part of the combined brake device (36) is located between inner and outer ends of the silencer (23) in a vehicle width direction, and
at least part of the combined brake device (36) is located between upper and lower ends of the silencer (23) in a vehicle up-and-down direction.

3. The straddled vehicle (1) according to claim 1 or 2, wherein
the combined brake device (36) further comprises a bracket (41), and
at least part of the bracket (41) is located rearward of the center axis (Ax1) of the pedal shaft (351).

4. The straddled vehicle (1) according to any of claims 1 to 3, wherein a range (R2) vertically projected from the second connection portion (47) overlaps at least part of the equalizer shaft (44) in the vehicle side view when the brake pedal (35) is in the zero stroke position.

5. The straddled vehicle (1) according to any of claims 1 to 4, wherein a range (R1) vertically projected from the first connection portion (46) overlaps at least part of the equalizer shaft (44) in the vehicle side view when the brake pedal (35) is in the zero stroke position.

6. The straddled vehicle (1) according to any of claims 1 to 5, wherein the range (R2) vertically projected from the second connection portion (47) overlaps at least part of the pedal shaft (351) in the vehicle side view when the brake pedal (35) is in the zero stroke position.

7. The straddled vehicle (1) according to any of claims 1 to 6 wherein the range (R1) vertically projected from the first connection portion (46) overlaps at least part of the pedal shaft (351) in the vehicle side view when the brake pedal (35) is in the zero stroke position.

8. The straddled vehicle (1) according to any of claims 1 to 7, wherein the center (C2) of the second connection portion (47) is located forward of the center axis (Ax2) of the equalizer shaft (44) in the vehicle side view when the brake pedal (35) is in a rear brake maximum position in which the rear brake transmission member (37) is maximally pulled.

9. The straddled vehicle (1) according to any of claims 1 to 8, wherein a range vertically projected from the second connection portion (47) overlaps at least part of the equalizer shaft (44) in the vehicle side view when the brake pedal (35) is in a rear brake maximum position in which the rear brake transmission member (37) is maximally pulled.

10. The straddled vehicle (1) according to any of claims 1 to 9, wherein the range (R1) vertically projected from the first connection portion (46) overlaps at least part of the equalizer shaft (44) in the vehicle side view when the brake pedal (35) is in a rear brake maximum position in which the rear brake transmission member (37) is maximally pulled.

11. The straddled vehicle (1) according to any of claims 1 to 10, wherein the combined brake transmission member (38) rearwardly extends from the first connection portion (46).

12. The straddled vehicle (1) according to any of claims 1 to 11, wherein the center (C2) of the second connection portion (47) is located on the imaginary straight line in the vehicle side view.

13. The straddled vehicle (1) according to any of claims 1 to 11, wherein the center (C2) of the second connection portion (47) is located rearward of the imaginary straight line in the vehicle side view.

## Patentansprüche

1. Reitsitzfahrzeug (1), das Folgendes umfasst:
einen Fahrzeugaufbaurahmen (12), der ein Steuerkopfrohr (11) umfasst,
eine Lenkvorrichtung (16), die ein Lenkerelement (18) umfasst, das manuell durch einen Fahrer bedienbar ist, wobei die Lenkvorrichtung (16) drehbar durch das Steuerkopfrohr (11) getragen wird,
einen Sitz (14), auf dem der Fahrer sitzen kann, wobei der Sitz (14) hinter der Lenkvorrichtung (16) angeordnet ist,
ein Vorderrad (12), das drehbar durch die Lenkvorrichtung (16) getragen wird,
ein Hinterrad (8), das hinter dem Vorderrad (12) angeordnet ist,
eine vordere Bremsvorrichtung (31) zum Bremsen des Vorderrades (12),
eine hintere Bremsvorrichtung (34) zum Bremsen des Hinterrades (8),
ein Bremspedal (35), das unterhalb des Sitzes (14) angeordnet ist, wobei das Bremspedal (35) mit einem Fuß des Fahrers betätigt wird,
eine Pedalwelle (351), die das Bremspedal (35) derart trägt, dass das Bremspedal (35) in Bezug auf den Fahrzeugrahmen (12) drehbar ist, und
eine kombinierte Bremsvorrichtung (36), die bei Anwendung bewirkt, dass als Reaktion auf ein Betätigen des Bremspedals (35) die hintere Bremsvorrichtung (34) und die vordere Bremsvorrichtung (31) auf eine verknüpfte Weise betätigt werden, wobei
die kombinierte Bremsvorrichtung (36) Folgendes umfasst:
ein kombiniertes Bremsübertragungselement (38), das mit der vorderen Bremsvorrichtung (31) verbunden ist,
ein hinteres Bremsübertragungselement (37), das mit der hinteren Bremsvorrichtung (34) verbunden ist,
einen Ausgleicher (43) und
eine Ausgleicherwelle (44), die den Ausgleicher (43) derart trägt, dass der Ausgleicher (43) in Bezug auf das Bremspedal (35) drehbar ist,
wobei der Ausgleicher (43) Folgendes umfasst:
einen ersten Verbindungsabschnitt (46), mit dem das kombinierte Bremsübertragungselement (38) verbunden ist, und einen zweiten Verbindungsabschnitt (47), mit dem das hintere Bremsübertragungselement (37) verbunden ist, wobei sich das hintere Bremsübertragungselement (37) rückwärtsvon dem zweiten Verbindungsabschnitt (47) aus erstreckt, wobei
eine Mittelachse (Ax2) der Ausgleicherwelle (44) vor einer Mittelachse (Ax1) der Pedalwelle (351) angeordnet ist, wenn sich das Bremspedal (35) in einer Nullhubstellung befindet, und
eine Mitte (C2) des zweiten Verbindungsabschnitts (47) in einer Fahrzeug-Seitenansicht auf oder hinter einer imaginären geraden Linie (L1) angeordnet ist, die durch eine Mitte (C1) des ersten Verbindungsabschnitts (46) und die Mittelachse (Ax2) der Ausgleicherwelle (44) hindurchgeht.

2. Reitsitzfahrzeug (1) nach Anspruch 1, das ferner Folgendes umfasst:
einen Schalldämpfer (23), der hinter der kombinierten Bremsvorrichtung (36) angeordnet ist, wobei
wenigstens ein Teil der kombinierten Bremsvorrichtung (36) in einer Fahrzeugbreitenrichtung zwischen einem inneren und einem äußeren Ende des Schalldämpfers (23) angeordnet ist und
wenigstens ein Teil der kombinierten Bremsvorrichtung (36) in einer Fahrzeug-Aufwärts-und-Abwärts-Richtung zwischen einem oberen und einem unteren Ende des Schalldämpfers (23) angeordnet ist.

3. Reitsitzfahrzeug (1) nach Anspruch 1 oder 2, wobei
die kombinierte Bremsvorrichtung (36) ferner eine Stütze (41) umfasst und
wenigstens ein Teil der Stütze (41) hinter der Mittelachse (Ax1) der Pedalwelle (351) angeordnet ist.

4. Reitsitzfahrzeug (1) nach einem der Ansprüche 1 bis 3, wobei ein Bereich (R2), der in Vertikalrichtung von dem zweiten Verbindungsabschnitt (47) vorspringt, in der Fahrzeug-Seitenansicht wenigstens einen Teil der Ausgleicherwelle (44) überlappt, wenn sich das Bremspedal (35) in der Nullhubstellung befindet.

5. Reitsitzfahrzeug (1) nach einem der Ansprüche 1 bis 4, wobei ein Bereich (R1), der in Vertikalrichtung von dem ersten Verbindungsabschnitt (46) vorspringt, in der Fahrzeug-Seitenansicht wenigstens einen Teil der Ausgleicherwelle (44) überlappt, wenn sich das Bremspedal (35) in der Nullhubstellung befindet.

6. Reitsitzfahrzeug (1) nach einem der Ansprüche 1 bis 5, wobei der Bereich (R2), der in Vertikalrichtung von dem zweiten Verbindungsabschnitt (47) vorspringt, in der Fahrzeug-Seitenansicht wenigstens einen Teil der Pedalwelle (351) überlappt, wenn sich das Bremspedal (35) in der Nullhubstellung befindet.

7. Reitsitzfahrzeug (1) nach einem der Ansprüche 1 bis 6, wobei der Bereich (R1), der in Vertikalrichtung von dem ersten Verbindungsabschnitt (46) vorspringt, in der Fahrzeug-Seitenansicht wenigstens einen Teil der Pedalwelle (351) überlappt, wenn sich das Bremspedal (35) in der Nullhubstellung befindet.

8. Reitsitzfahrzeug (1) nach einem der Ansprüche 1 bis 7, wobei die Mitte (C2) des zweiten Verbindungsabschnitts (47) in der Fahrzeug-Seitenansicht vor der Mittelachse (Ax2) der Ausgleicherwelle (44) angeordnet ist, wenn sich das Bremspedal (35) in einer hinteren Bremsmaximalstellung befindet, in der das hintere Bremsübertragungselement (37) maximal gezogen wird.

9. Reitsitzfahrzeug (1) nach einem der Ansprüche 1 bis 8, wobei ein Bereich, der in Vertikalrichtung von dem zweiten Verbindungsabschnitt (47) vorspringt, in der Fahrzeug-Seitenansicht wenigstens einen Teil der Ausgleicherwelle (44) überlappt, wenn sich das Bremspedal (35) in einer hinteren Bremsmaximalstellung befindet, in der das hintere Bremsübertragungselement (37) maximal gezogen wird.

10. Reitsitzfahrzeug (1) nach einem der Ansprüche 1 bis 9, wobei der Bereich (R1), der in Vertikalrichtung von dem ersten Verbindungsabschnitt (46) vorspringt, in der Fahrzeug-Seitenansicht wenigstens einen Teil der Ausgleicherwelle (44) überlappt, wenn sich das Bremspedal (35) in einer hinteren Bremsmaximalstellung befindet, in der das hintere Bremsübertragungselement (37) maximal gezogen wird.

11. Reitsitzfahrzeug (1) nach einem der Ansprüche 1 bis 10, wobei sich das kombinierte Bremsübertragungselement (38) von dem ersten Verbindungsabschnitt (46) aus nach hinten erstreckt.

12. Reitsitzfahrzeug (1) nach einem der Ansprüche 1 bis 11, wobei die Mitte (C2) des zweiten Verbindungsabschnitts (47) in der Fahrzeug-Seitenansicht auf der imaginären geraden Linie angeordnet ist.

13. Reitsitzfahrzeug (1) nach einem der Ansprüche 1 bis 11, wobei die Mitte (C2) des zweiten Verbindungsabschnitts (47) in der Fahrzeug-Seitenansicht hinter der imaginären geraden Linie angeordnet ist.

## Revendications

1. Véhicule à enfourcher (1) comprenant :
un cadre de véhicule (12) comprenant un tube de tête (11) ;
un dispositif de direction (16) comprenant un élément de guidon (18) pouvant être actionné manuellement par un conducteur, le dispositif de direction (16) étant supporté en rotation par le tube de tête (11) ;
un siège (14) sur lequel le conducteur peut s'asseoir, le siège (14) étant disposé vers l'arrière du dispositif de direction (16) ;
une roue avant (12) supportée en rotation par le dispositif de direction (16) ;
une roue arrière (8) disposée à l'arrière de la roue avant (12) ;
un dispositif de freinage avant (31) permettant de freiner la roue avant (12) ;
un dispositif de freinage arrière (34) permettant de freiner la roue arrière (8) ;
une pédale de frein (35) disposée sous le siège (14), la pédale de frein (35) étant actionnée avec un pied du conducteur ;
un arbre de pédale (351) supportant la pédale de frein (35) de sorte que la pédale de frein (35) puisse tourner relativement au cadre de véhicule (12) ; et
un dispositif de freinage combiné (36) qui, en cours d'utilisation, provoque l'actionnement du dispositif de freinage arrière (34) et du dispositif de freinage avant (31) d'une manière liée en réponse à l'actionnement de la pédale de frein (35), dans lequel
le dispositif de freinage combiné (36) comprenant :
un élément de transmission de freinage combiné (38) raccordé au dispositif de freinage avant (31),
un élément de transmission de freinage arrière (37) raccordé au dispositif de freinage arrière (34),
un stabilisateur (43), et
un arbre de stabilisateur (44) supportant le stabilisateur (43) de sorte que le stabilisateur (43) puisse tourner relativement à la pédale de frein (35),
le stabilisateur (43) comprenant :
une première partie de raccordement (46) à laquelle l'élément de transmission de freinage combiné (38) est raccordé, et une seconde partie de raccordement (47) à laquelle l'élément de transmission de freinage arrière (37) est raccordé, l'élément de transmission de freinage arrière (37) s'étendant vers l'arrière depuis la seconde partie de raccordement (47), dans lequel
un axe central (Ax2) de l'arbre de stabilisateur (44) est situé vers l'avant d'un axe central (Ax1) de l'arbre de pédale (351) lorsque la pédale de frein (35) est dans la position de course zéro, et
un centre (C2) de la seconde partie de raccordement (47) est situé sur ou à l'arrière d'une ligne droite imaginaire (L1) passant à travers un centre (C1) de la première partie de raccordement (46) et de l'axe central (Ax2) de l'arbre de stabilisateur (44) dans une vue latérale du véhicule.

2. Véhicule à enfourcher (1) selon la revendication 1, comprenant en outre :
un silencieux (23) disposé derrière le dispositif de freinage combiné (36), dans lequel
au moins une partie du dispositif de freinage combiné (36) est située entre des extrémités interne et externe du silencieux (23) dans le sens de la largeur d'un véhicule, et
au moins une partie du dispositif de freinage combiné (36) est située entre des extrémités supérieure et inférieure du silencieux (23) dans la direction de haut en bas du véhicule.

3. Véhicule à enfourcher (1) selon la revendication 1 ou 2, dans lequel
le dispositif de freinage combiné (36) comprend en outre un support (41), et
au moins une partie du support (41) est située à l'arrière de l'axe central (Ax1) de l'arbre de pédale (351).

4. Véhicule à enfourcher (1) selon l'une quelconque des revendications 1 à 3, dans lequel une zone (R2) projetée de manière verticale depuis la seconde partie de raccordement (47) recouvre au moins une partie de l'arbre de stabilisateur (44) dans la vue latérale du véhicule lorsque la pédale de frein (35) est dans la position de course zéro.

5. Véhicule à enfourcher (1) selon l'une quelconque des revendications 1 à 4, dans lequel une zone (R1) projetée de manière verticale depuis la première partie de raccordement (46) recouvre au moins une partie de l'arbre de stabilisateur (44) dans la vue latérale du véhicule lorsque la pédale de frein (35) est dans la position de course zéro.

6. Véhicule à enfourcher (1) selon l'une quelconque des revendications 1 à 5, dans lequel la zone (R2) projetée de manière verticale depuis la seconde partie de raccordement (47) recouvre au moins une partie de l'arbre de pédale (351) dans la vue latérale du véhicule lorsque la pédale de frein (35) est dans la position de course zéro.

7. Véhicule à enfourcher (1) selon l'une quelconque des revendications 1 à 6, dans lequel la zone (R1) projetée de manière verticale depuis la première partie de raccordement (46) recouvre au moins une partie de l'arbre de pédale (351) dans la vue latérale du véhicule lorsque la pédale de frein (35) est dans la position de course zéro.

8. Véhicule à enfourcher (1) selon l'une quelconque des revendications 1 à 7, dans lequel le centre (C2) de la seconde partie de raccordement (47) est située à l'avant de l'axe central (Ax2) de l'arbre de stabilisateur (44) dans la vue latérale du véhicule lorsque la pédale de frein (35) est dans une position maximale de freinage arrière dans laquelle l'élément de transmission du freinage arrière (37) est tiré au maximum.

9. Véhicule à enfourcher (1) selon l'une quelconque des revendications 1 à 8, dans lequel une zone projetée de manière verticale depuis la seconde partie de raccordement (47) recouvre au moins une partie de l'arbre de stabilisateur (44) dans la vue latérale du véhicule lorsque la pédale de frein (35) est dans une position maximale de freinage arrière dans laquelle l'élément de transmission de freinage arrière (37) est tiré au maximum.

10. Véhicule à enfourcher (1) selon l'une quelconque des revendications 1 à 9, dans lequel la zone (R1) verticalement projetée depuis la première partie de raccordement (46) recouvre au moins une partie de l'arbre de stabilisateur (44) dans la vue latérale du véhicule lorsque la pédale de frein (35) est dans une position maximale de freinage arrière dans laquelle l'élément de transmission de freinage arrière (37) est tiré au maximum.

11. Véhicule à enfourcher (1) selon l'une quelconque des revendications 1 à 10, dans lequel l'élément de transmission de freinage combiné (38) s'étend vers l'arrière depuis la première partie de raccordement (46).

12. Véhicule à enfourcher (1) selon l'une quelconque des revendications 1 à 11, dans lequel le centre (C2) de la seconde partie de raccordement (47) est situé sur une ligne droite imaginaire dans la vue latérale du véhicule.

13. Véhicule à enfourcher (1) selon l'une quelconque des revendications 1 à 11, dans lequel le centre (C2) de la seconde partie de raccordement (47) est situé à l'arrière de la ligne droite imaginaire dans la vue latérale du véhicule.
